# EUROPEAN PATENT APPLICATION

(11) **EP 3 293 692 A1**
(43) Date of publication of application: **14.03.2018**
(21) Application number: 17190446.9
(22) Date of filing: 11.09.2017
(51) Int. Cl.: G06Q 30/02

(54) **SALES PROMOTION PROCESSING SYSTEM AND SALES PROMOTION PROCESSING PROGRAM**

(30) Priority: 12.09.2016 JP 2016177944
(71) Applicant: Toshiba TEC Kabushiki Kaisha, Tokyo 141-8562 (JP)
(72) Inventor: INAGAWA, Nobuhiro, Shinagawa-ku, Tokyo 141-8562 (JP)
(74) Representative: Takeuchi, Maya

(57) **Abstract**

A sales promotion processing device according to an embodiment includes an input device, a display device, a communication interface, and a processor. The input device receives input of one or more criteria for a planned sales promotion. The processor generates a new sales promotion based on the received one or more criteria. The processor retrieves, from a sales promotion database that stores data related to past sales promotions via the communication interface, one or more past sales promotions having at least a predetermined number of criteria that are similar to the received one or more criteria. The processor predicts a result of the generated new sales promotion by evaluating the generated new sales promotion relative to feature data extracted from the criteria of the retrieved one or more past sales promotions by machine learning. The display device displays the predicted result.

## Description

### FIELD

The present invention relates to a data processing technology for sales promotion, and embodiments described herein relate in particular to a sales promotion processing system and a sales promotion processing program.

### BACKGROUND

In the related art, a system stores data related to sales promotions performed in the past and data related to sales of merchandises sold in the promotions. When a period, a targeted merchandise, or the like of a new sales promotion to be planned is input to the system, the system obtains and displays information for supporting planning of the new sales promotion based on the data.

However, even if such a system is used, the planning of the sales promotion often depends on the experience of a person in charge.

To improve such situations, there is provided a sales promotion processing device comprising:
an input device;
a display device;
a communication interface; and
a processor configured to:
   receive, via the input device, input of one or more criteria for a planned sales promotion,
   generate a new sales promotion based on the received one or more criteria,
   retrieve, from a sales promotion database that stores data related to past sales promotions via the communication interface, one or more past sales promotions having at least a predetermined number of criteria that are similar to the received one or more criteria,
   predict a result of the generated new sales promotion by evaluating the generated new sales promotion relative to feature data extracted from the criteria of the retrieved one or more past sales promotions by machine learning, and
   control the display device to display the predicted result.

Preferably, the sales promotion processing device further comprises:
a storage device, wherein the processor controls the storage device to store the new sales promotion in response to a detected input in the input device corresponding to a save instruction.

Preferably still, the processor is further configured to:
control the display device to display a new sales promotion screen that includes:
   details of the new sales promotion,
   a past check operation button, and
   a prediction check operation button.

Preferably yet, in response to a detected input in the input device corresponding to the past check operation button, the processor retrieves the one or more past sales promotions having at least a first predetermined number of criteria that are similar to the received one or more criteria, and controls the display device to display the retrieved one or more past sales promotions.

Preferably further, in response to a detected input in the input device corresponding to the prediction check operation button, the processor retrieves the one or more past sales promotions having at least a second predetermined number of criteria that are similar to the received one or more criteria, predicts the result of the generated new sales promotion, and controls the display device to display the predicted result.

In the above sales promotion processing device, the first predetermined number is preferably different from the second predetermined number.

Typically, the feature data is extracted from the criteria of the retrieved one or more past sales promotions by a learning processing device using machine learning in a multi-layered neural network.

The invention also relates to a non-transitory computer readable medium containing a program that causes a computer to perform a sales promotion processing method comprising the steps of:
receiving, via an input device, input of one or more criteria for a planned sales promotion;
generating a new sales promotion based on the received one or more criteria;
retrieve, from a sales promotion database that stores data related to past sales promotions via the communication interface, one or more past sales promotions having at least a predetermined number of criteria that are similar to the received one or more criteria;
predicting a result of the generated new sales promotion by evaluating the generated new sales promotion relative to feature data extracted from the criteria of the retrieved one or more past sales promotions by machine learning; and controlling a display device to display the predicted result.

Suitably, in the non-transitory computer readable medium, the method further comprises:
controlling a storage device to store the new sales promotion in response to a detected input in the input device corresponding to a save instruction.

Suitably still, the method further comprises:
controlling the display device to display a new sales promotion screen that includes:
   details of the new sales promotion,
   a past check operation button, and
   a prediction check operation button.

In the above non-transitory computer readable medium, the method preferably further comprises:
detecting an past check input corresponding to the past check operation button, wherein the one or more past sales promotions having at least a first predetermined number of criteria that are similar to the received one or more criteria are retrieved in response to the detected past check input; and
controlling the display device to display the retrieved one or more past sales promotions.

Also in the above non-transitory computer readable medium, the method preferably further comprises:
detecting a prediction check input corresponding to the prediction check operation button, wherein the one or more past sales promotions having at least a second predetermined number of criteria that are similar to the received one or more criteria are retrieved in response to the detected prediction check input.

Further in the above non-transitory computer readable medium, the first predetermined number is preferably different from the second predetermined number.

Typically, the feature data is extracted from the criteria of the retrieved one or more past sales promotions by a learning processing device using machine learning in a multi-layered neural network.

The invention further relates to a sales promotion processing system comprising:
a first computing device configured to:
   receive criteria of each of one or more past sales promotions,
   receive parameters regarding performance of each of the one or more past sales promotions,
   extract, by machine learning, feature data based on the criteria of the retrieved one or more past sales promotions and the received parameters, and
   store the extracted feature data; and
a second computing device including at least an input device, a display device, a communication interface, and a processor configured to:
   receive, via the input device, input of one or more criteria for a planned sales promotion,
   generate a new sales promotion based on the received one or more criteria,
   retrieve, from a sales promotion database that stores data related to past sales promotions via the communication interface, one or more past sales promotions having at least a predetermined number of criteria that are similar to the received one or more criteria,
   receive, from the first computing device, the extracted feature data,
   predict a result of the generated new sales promotion by evaluating the generated new sales promotion relative to the received feature data, and
   control the display device to display the predicted result.

Suitably, the second computing device further comprises:
a storage device, wherein the processor controls the storage device to store the new sales promotion in response to a detected input in the input device corresponding to a save instruction.

Suitably still, the processor of the second computing device is further configured to:
control the display device to display a new sales promotion screen that includes:
   details of the new sales promotion,
   a past check operation button, and
   a prediction check operation button.

Suitably yet, in response to a detected input in the input device corresponding to the past check operation button, the processor of the second computing device retrieves the one or more past sales promotions having at least a first predetermined number of criteria that are similar to the received one or more criteria, and controls the display device to display the retrieved one or more past sales promotions.

In the above sales promotion processing system, in response to a detected input in the input device corresponding to the prediction check operation button, the processor of the second computing device preferably retrieves the one or more past sales promotions having at least a second predetermined number of criteria that are similar to the received one or more criteria, predicts the result of the generated new sales promotion, and controls the display device to display the predicted result, and
the first predetermined number is different than the second predetermined number.

Typically, the first computing device extracts the feature data from the criteria of the retrieved one or more past sales promotions using machine learning in a multi-layered neural network.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating an example schematic configuration of a sales promotion information providing system of an embodiment.
FIG. 2 illustrates an example data record stored in a sales promotion database managed by a sales promotion server of the sales promotion information providing system.
FIG. 3 is a block diagram illustrating an example configuration of a sales promotion processing device of the sales promotion information providing system.
FIG. 4 is a flowchart illustrating an example sequence of operations performed by the sales promotion processing device.
FIG. 5 illustrates an example sales promotion input screen.
FIG. 6 illustrates an example sales promotion providing screen.
FIG. 7 illustrates an example similar sales promotion list screen.
FIG. 8 illustrates an example prediction result screen.

### DETAILED DESCRIPTION

Data related to a past sales promotion and data related to sales of merchandise sold during the past sales promotion are stored. Therefore, when information related to the sales promotion is input, it is possible to collectively obtain data related to past sales promotions, and it is possible to efficiently plan an equivalent new sales promotion.

Embodiments provide a sales promotion information providing system capable of collecting information for a new sales promotion even if there are no similar sales promotions in the past.

A sales promotion processing device according to an embodiment includes an input device, a display device, a communication interface, and a processor. The input device receives input of one or more criteria for a planned sales promotion. The processor generates a new sales promotion based on the received one or more criteria. The processor retrieves, from a sales promotion database that stores data related to past sales promotions via the communication interface, one or more past sales promotions having at least a predetermined number of criteria that are similar to the received one or more criteria. The processor predicts a result of the generated new sales promotion by evaluating the generated new sales promotion relative to feature data extracted from the criteria of the retrieved one or more past sales promotions by machine learning. The display device displays the predicted result.

Hereinafter, an embodiment of a sales promotion information providing system capable of collecting information for a new sales promotion even if there are no similar sales promotions in the past will be described with reference to the drawings. The sales promotion information is information indicating content of the sales promotion. The sales promotion is performed by a store so as to increase customers' willingness to purchase, for example. The content of the sales promotion is not particularly limited. The content of the sales promotion may be a sales promotion for all customers, or may be a sales promotion for a specific customer group such as members or other targeted customer group. In addition, the content of the sales promotion may give benefits such as price discounts to customers, or give benefits such as coupons and prizes to customers. The sales promotion performance period may be, for example, a short period of several days to one week or longer, or may be a longer period than that.

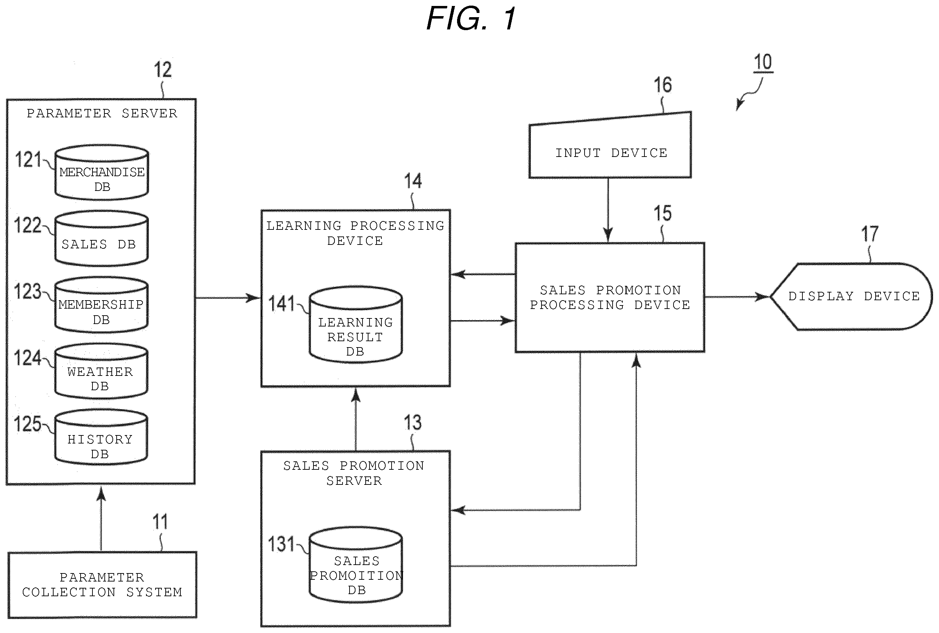

FIG. 1 is a block diagram illustrating an example schematic configuration of a sales promotion information providing system 10 of the embodiment. The sales promotion information providing system 10 includes a parameter collection system 11, a parameter server 12, a sales promotion server 13, a learning processing device 14, a sales promotion processing device 15, an input device 16, and a display device 17.

The parameter collection system 11 is a computer system for collecting various parameter data which influence a performance result of a sales promotion. The parameter data includes merchandise data, sales data, membership data, weather data, calendar data, and the like.

The merchandise data is data for specifying merchandise sold at stores. The merchandise data includes, for each merchandise item, a merchandise code, a merchandise name, a unit price, and the like. When the sales promotion is performed, information on the type of merchandise items that are sold at stores influences a performance result of the sales promotion. Therefore, in this embodiment, the merchandise data is set as one type of the parameter data.

The sales data is data related to sales of merchandise. The sales data includes the number of sold merchandise, the sales amount, the number of customers, discount amount, the number of discarded merchandise items, the amount of money of discarded merchandise, and the like. The sales data is aggregated for each classification type of items, according to, for example, a type of merchandise, a time zone, and a type of customer classification. When the sales promotion is performed, the ratio between the sales and discarded amount of each merchandise type, a visitor rate for each time zone, a purchase rate for each customer, and the like influence the performance result of the sales promotion. Therefore, in the embodiment, the sales data is set as one type of parameter data.

The membership data is data related to customers who are members. The membership data includes sex, age, occupation, cumulative points, rank, purchase history, and the like. When the sales promotion is performed, the purchasing behavior of the members influences the performance result of the sales promotion. Therefore, in the present embodiment, the membership data is set as one type of parameter data.

Weather data is data related to daily weather. The weather data includes weather, temperature, humidity, precipitation, and the like. When the sales promotion is performed, a weather condition influences the performance result of the sales promotion. In the embodiment, the weather data is set as one of the parameter data.

The calendar data is data related to calendar of a store location area. The calendar data includes regional events such as festivals, athletic meetings and entrance ceremonies as well as year, month, day, day of the week, public holiday, season, and the like. When the sales promotion is performed, the calendar of a store location area influences the performance result of the sales promotion. In the embodiment, the calendar data is set as one of the parameter data.

The parameter collection system 11 collects the above-described parameter data on a daily basis and outputs the collected parameter to the parameter server 12. For example, the merchandise data, the sales data, and the membership data can be collected from a server of a point of sales (POS) system. For example, the weather data can be collected from an external server that provides weather information service. For example, the calendar data can be collected from a personal computer in which a calendar program and an application program for schedule management are installed. The parameter collection system 11 may collect the above-described parameter data from other information sources.

The parameter server 12 manages parameter databases such as a merchandise database 121, a sales database 122, a member database 123, a weather database 124, and a calendar database 125. These parameter databases 121 to 125 are stored in an auxiliary storage device of the parameter server 12.

The merchandise database 121 stores the merchandise data in date order. The sales database 122 also stores the sales data in date order. The member database 123 also stores the membership data in date order. The weather database 124 also stores the weather data in date order. The calendar database 125 also stores the calendar data in date order. The parameter server 12 provides data from parameter databases 121 to 125 to the learning processing device 14 through a network.

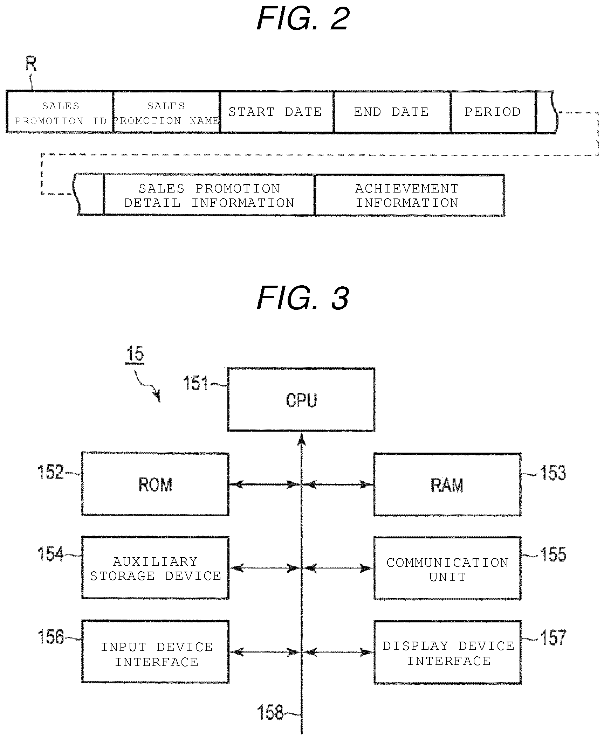

The sales promotion server 13 manages a sales promotion database 131. The sales promotion database 131 is stored in an auxiliary storage device of the sales promotion server 13. The sales promotion database 131 stores data of the sales promotion that has been performed or is to be performed. The main part of a data record R stored in the sales promotion database 131 is illustrated in FIG. 2. As illustrated in FIG. 2, the data record R includes item data such as a sales promotion ID, a sales promotion name, a start date, an end date, a period, sales promotion detailed information, and achievement information.

The sales promotion ID is a unique code generated for each sales promotion in order to individually identify sales promotions. The sales promotion name is a title of a sales promotion (hereinafter, referred to as the sales promotion) specified by the sales promotion ID. The start date and the end date are the date on which the sales promotion starts and the data on which the sales promotion ends, and the period is the number of days from the start date to the end date.

The sales promotion detailed information is information indicating content of the sales promotion. The content of the sales promotion includes items such as a target, a condition, and benefit. The target is an item indicating a customer who is a target of the benefit in the sales promotion. For example, if a sales promotion is directed at members, the target is the "member". The condition is an item indicating conditions for granting benefits in the sales promotion. For example, in a case of a sales promotion in which benefit is granted when purchasing 3,000 yen or more, the condition is that "purchase price is 3,000 yen or more". The benefit is an item indicating content of the benefit which can be received when a customer who is a target of the sales promotion satisfies the condition. For example, in a case of a sales promotion in which a food coupon is issued, the benefit is "issuance of the food coupon".

The achievement information is an achievement within a period during which the sales promotion is performed. The achievement includes a sales amount, profit margin, or the like. In addition, in a case of a sales promotion in which the coupon is issued, the number of issued coupons, the number of used coupons, and the like are also included in the achievement. The achievement information can be collected from a server of the POS system (not illustrated). The sales promotion server 13 provides data from the sales promotion database 131 to the learning processing device 14 and the sales promotion processing device 15 through a network.

The learning processing device 14 performs learning for obtaining parameters used for evaluation of the sales promotion by using the data of the sales promotion database 131 provided from the sales promotion server 13 and the data of the parameter databases 121 to 125 provided from the parameter server 12 as the learning data. The learning algorithm uses deep learning technology in which a neural network is multilayered. That is, the learning processing device 14 extracts feature data of each learning data by performing machine learning through the deep learning.

The data of the sales promotion database 131 is the data of the sales promotion that has been performed or is to be performed. Accordingly, the achievement information is included in the data of the sales promotion that has been performed. Meanwhile, the data of each of the parameter databases 121 to 125 is data which influences the performance result of the sales promotion. Therefore, the feature data of these data is effective as a parameter used for evaluation of the sales promotion. The learning processing device 14 stores a result obtained by learning, that is, the parameter used for the evaluation of the sales promotion in a learning result database 141.

The sales promotion processing device 15 is connected to each of the input device 16 and the display device 17 through a communication cable. In addition, the sales promotion processing device 15 is connected to the sales promotion server 13 and the learning processing device 14 through a network.

The sales promotion processing device 15 receives an input of criteria related to the sales promotion to be performed from the input device 16. When the input is received, the sales promotion processing device 15 creates the sales promotion including the one or more criteria with reference to past sales promotions, and evaluates the sales promotion by using the parameter stored in the learning result database 141. Therefore, the sales promotion processing device 15 outputs information of the sales promotion which is most highly rated to the display device 17. The display device 17 displays the information of the sales promotion. In addition, the sales promotion processing device 15 can output the information of the sales promotion which is most highly rated to the sales promotion server 13. The sales promotion server 13 stores the information of the sales promotion in the sales promotion database 131.

The input device 16 is a device for inputting the criteria of the sales promotion to be performed, and may be a keyboard, a touch panel, a pointing device, or the like. The display device 17 is a device for displaying the information of the sales promotion, and may be a liquid crystal display, a plasma display, an electroluminescent (EL) display, or the like.

FIG. 3 is a block diagram illustrating an example configuration of the sales promotion processing device 15. As illustrated in the figure, the sales promotion processing device 15 includes a central processing unit (CPU) 151, a read only memory (ROM) 152, a random access memory (RAM) 153, an auxiliary storage device 154, a communication unit 155, an input device interface 156, and a display device interface 157. In addition, the sales promotion processing device 15 includes a system transmission path 158 including an address bus, a data bus, a control signal line, and the like. The CPU 151, the ROM 152, the RAM 153, the auxiliary storage device 154, the communication unit 155, the input device interface 156, the display device interface 157, and the like are connected to the system transmission path 158.

The ROM 152, the RAM 153, and the auxiliary storage device 154 are connected to the CPU 151 through the system transmission path 158, and thus, the sales promotion processing device 15 is provided as a computer. The CPU 151 corresponds to a central processor of the computer. The CPU 151 controls each unit for realizing various functions as a device in accordance with an operating system and an application program.

The ROM 152 corresponds to a main storage unit of the above-described computer. The ROM 152 stores the above-described operating system and application program. The ROM 152 may also store data required for the CPU 151 to perform a process for controlling each unit. The RAM 153 corresponds to a temporary storage unit of the above-described computer. The RAM 153 stores the data required for the CPU 151 to perform a process. In addition, the RAM 153 is also used as a work area where information is appropriately rewritten by the CPU 151.

The auxiliary storage device 154 corresponds to an auxiliary storage unit of the above-described computer. For example, the auxiliary storage device 154 is an electric erasable programmable read-only memory (EEPROM), a hard disc drive (HDD), a solid state drive (SSD), or the like. The auxiliary storage device 154 stores data used by the CPU 151 which performs various processes, and data generated by a process in the CPU 151. The auxiliary storage device 154 may also store the above-described application program.

The communication unit 155 is connected to a network (not illustrated), and performs data communication with the learning processing device 14 and the sales promotion server 13 through the network. For example, the network is a local area network, the Internet, a mobile communication network, or the like.

The input device interface 156 is connected to the input device 16 described above, and obtains data that is input through the input device 16.

The display device interface 157 is connected to the display device 17 described above, and outputs display data to the display device 17.

The sales promotion processing device 15 having such a configuration has the following functions. That is, the sales promotion processing device 15 has a function (input reception unit) of receiving an input of the criteria of the sales promotion to be performed, a function (creation unit) of creating the sales promotion including the criteria, a function (output unit) of outputting information of the sales promotion, and a function (storage unit) of storing the information of the sales promotion in the sales promotion database 131. Furthermore, the sales promotion processing device 15 has a function (search unit) of searching for a sales promotion having been performed similar to the sales promotion, and a function (prediction unit) of predicting achievement of the sales promotion. These functions are realized by performing a sales promotion processing program (sales promotion information providing program) by the CPU 151. The sales promotion processing program is an application program stored in the ROM 152 or the auxiliary storage device 154.

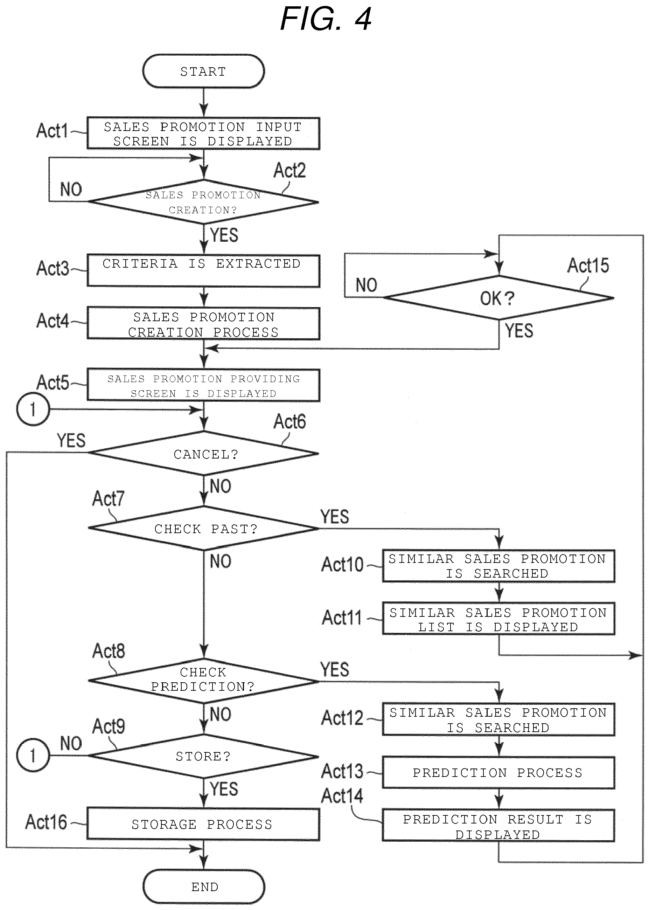

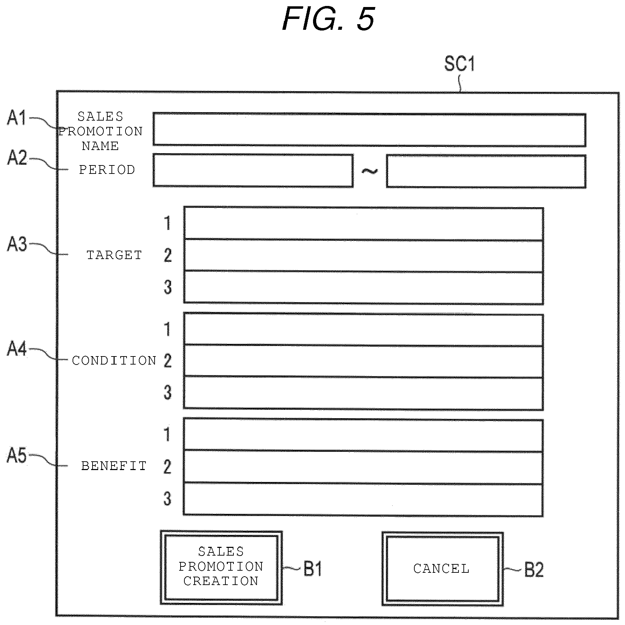

FIG. 4 is a flowchart illustrating a main procedure of an information process that the CPU 151 performs in accordance with the sales promotion processing program. In addition, FIG. 5 to FIG. 8 are examples of various screens displayed on the display device 17 in accordance the above-described information process. Hereinafter, a procedure in which a person in charge of the sales promotion planning in the store (hereinafter referred to as person in charge) plans the sales promotion by using the sales promotion information providing system 10 will be described by using FIG. 4 to FIG. 8. It is assumed that the person in charge operates the input device 16 and views a screen of the display device 17.

First, the person in charge operates the input device 16 to activate the sales promotion processing program of the sales promotion processing device 15. For example, an icon for activating the sales promotion processing program is displayed on a menu screen displayed on the display device 17, and the person in charge selects and operates this icon.

When the sales promotion processing program is activated by an input from the input device 16, the CPU 151 starts the information process of the procedure illustrated in the flowchart of FIG. 4. First, the CPU 151 controls the display device interface 157 so as to display a sales promotion input screen SC1 (see FIG. 5) on the display device 17 as Act 1. Through this control, data of the sales promotion input screen SC1 is transmitted from the display device interface 157 to the display device 17, and the sales promotion input screen SC1 is displayed on the display device 17.

FIG. 5 is a display example of the sales promotion input screen SC1. As illustrated in the drawing, the sales promotion input screen SC1 has a sales promotion name input field A1, a period input field A2, a target input field A3, a condition input field A4, and a benefit input field A5. In addition, the sales promotion input screen SC1 has a sales promotion creation button B1 and a cancel button B2.

The sales promotion name input field A1 is a field for inputting a title that is set for the sales promotion to be performed. The period input field A2 is a field for inputting the start date and the end date of the period in which the sales promotion will be performed. In the period input field A2, the start date and the number of days may be input. The target input field A3 is a field for inputting information to specify a customer who is a target of the benefit in the sales promotion. The information may indicate all customers, members, non-members, customer classifications (for example, women in twenties or over 60 years old), or the like. The condition input field A4 is a field for inputting information indicating the benefit condition in the sales promotion. The benefit input field A5 is a field for inputting information indicating the benefit given in a case where the customer who is the target of the sales promotion satisfies the benefit condition. It is possible to input a plurality of pieces of the information in the target input field A3, the condition input field A4, and the benefit input field A5 (in the drawing, space for three pieces of information in each field is shown). Priories are set to the input information in descending order from the top of the screen SC1.

The person in charge who has checked the sales promotion input screen SC1 operates the input device 16, and inputs desired information into each of the input fields A1, A2, A3, A4, and A5. Here, an input to the sales promotion name input field A1 and the period input field A2 is mandatory. An input to other input fields A3, A4, and A5 is optional. The person in charge who has finished inputting on the sales promotion input screen SC1 inputs and operates the sales promotion creation button B1. In a case of inputting again, the person in charge inputs and operates the cancel button B2. When input with respect to the cancel button B2 is performed, a state of the sales promotion input screen SC1 returns to an initial state.

The CPU 151 that has displayed the sales promotion input screen SC1 waits for inputting the sales promotion creation button B1 as Act 2. When input of the sales promotion creation button B1 is detected based on a signal from the input device 16, the CPU 151 retrieves the information input to the sales promotion input screen SC1 from the display device 17 as Act 3, and extracts the one or more criteria related to the sales promotion to be performed, that is, a so-called scheduled sales promotion. That is, the CPU 151 extracts information input to the sales promotion name input field A1 of the sales promotion input screen SC1 as the name of the scheduled sales promotion. Similarly, the CPU 151 extracts information input to the period input field A2 as a period of the scheduled sales promotion. In addition, in a case where information is input to the target input field A3, the CPU 151 extracts the information as the target of the scheduled sales promotion. Similarly, in a case where information is input to the condition input field A4, the CPU 151 extracts the information as a condition of the scheduled sales promotion, and in a case where the information is input to the benefit input field A5, the CPU 151 extracts the information as the benefit of the scheduled sales promotion.

Here, the CPU 151 performs processes of Act 1 to Act 3 in cooperation with the input device 16 and the display device 17, to thereby to function as the input reception unit.

When the criteria are extracted, the CPU 151 performs a sales promotion creation process as Act 4. That is, the CPU 151 selects a data record which is similar to the sales promotion name and the period of the criteria, from the sales promotion database 131. Accordingly, the CPU 151 creates the sales promotion including the criteria as much as possible based on the sales promotion detailed information of the data record. The CPU 151 evaluates all the created sales promotions with the parameters stored in the learning result database 141. Accordingly, the CPU 151 determines the sales promotion which is most highly rated as the final creation object.

Here, the CPU 151 performs a process of Act 4 in cooperation with the sales promotion server 13 and the learning processing device 14 to thereby function as the creation unit.

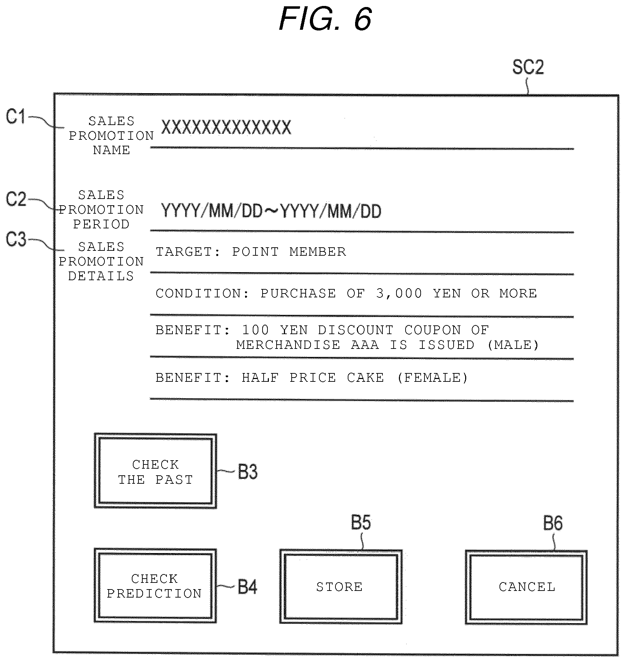

When the sales promotion creation process is finished, the CPU 151 controls the display device interface 157 so as to display a sales promotion providing screen SC2 (see FIG. 6) on the display device 17 based on the information of the sales promotion determined as the final creation object as Act 5. Through this control, data of the sales promotion providing screen SC2 is transmitted from the display device interface 157 to the display device 17, and the sales promotion providing screen SC2 is displayed on the display device 17.

FIG. 6 is a display example of the sales promotion providing screen SC2. As illustrated in the drawing, the sales promotion providing screen SC2 includes a display field C1 of a sales promotion name, a display field C2 of a sales promotion period, and a display field C3 of sales promotion details. In addition, the sales promotion providing screen SC2 includes a past check button B3, a prediction check button B4, a save button B5, and a cancel button B6. The name of the sales promotion determined as the final creation object in the process of Act 4 is displayed on the display field C 1. A period of the sales promotion is displayed on the display field C2. A target, a condition, benefits, and the like of the sales promotion are displayed on the display field C3.

Here, the CPU 151 performs a process of Act 5 in cooperation with the display device 17 to thereby function as the output unit.

The person in charge checks the sales promotion determined as the final creation object, that is, the content of the sales promotion automatically generated by the sales promotion information providing system 10, from the display on the sales promotion providing screen SC2. Accordingly, in a case where this sales promotion is adopted, the person in charge inputs and operates the save button B5. In a case where this sales promotion is not adopted, the person in charge inputs and operates the cancel button B6. In a case where a part of the sales promotion details is corrected and this sales promotion projection is adopted, the person in charge operates the input device 16 to appropriately correct content thereof and then inputs and operates the save button B5.

In addition, when the person in charge wants to check similar sales promotions in the past to determine whether or not to adopt the sales promotion, he/she inputs and operates the past check button B3. When the person in charge wants to check a prediction effect that would be obtained by the sales promotion, he/she inputs and operates the prediction check button B4.

The CPU 151 that has displayed the sales promotion providing screen SC2 checks whether or not the cancel button B6 is input as Act 6. In a case where the cancel button B6 is not input (NO in Act 6), the CPU 151 checks whether or not the past check button B3 is input as Act 7. In a case where the past check button B3 is not input (NO in Act 7), the CPU 151 checks whether or not the prediction check button B4 is input as Act 8. In a case where the prediction check button B4 is not input (NO in act 8), the CPU 151 checks whether or not the save button B5 is input as Act 9. In a case where the save button B5 is not input (NO in Act 9), the CPU 151 returns to the process of Act 6 and checks again whether or not the cancel button B6 is input. Here, the CPU 151 waits until any one of the cancel button B6, the past check button B3, the prediction check button B4, and the save button B5 is input, in the processes of Act 6 to Act 9.

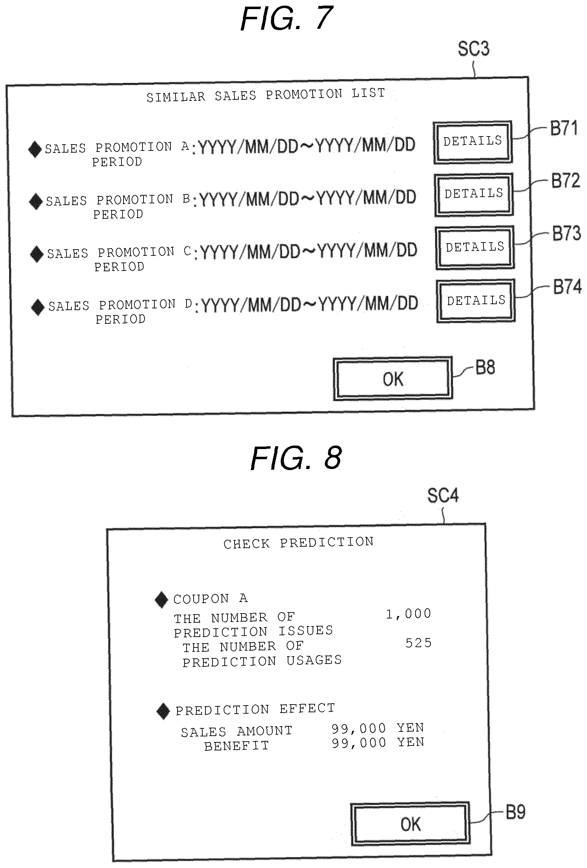

In a waiting state of Act 6 to Act 9, when waiting for a signal from the input device 16 that the past check button B3 is input (YES in Act 7), the CPU 151 performs a similar sales promotion search process as Act 10. That is, the CPU 151 obtains information (target, condition, benefit, and the like) of sales promotion details displayed on the display field C3 of the sales promotion providing screen SC2. Therefore, in a case where the person in charge makes a correction, the CPU 151 obtains information after the correction. When the information of the sales promotion details is obtained, the CPU 151 accesses the sales promotion server 13 and searches for the data record R stored in the sales promotion database 131 with the information. Accordingly, the CPU 151 calculates a similarity for each item such as a period, a target, a condition, the benefit, and the like for each data record R, and finds a data record R having a total of similarities equal to or more than a predetermined value. The CPU 151 creates a list of similar sales promotions from information of the data record R having the total of similarities equal to or more than the predetermined value as Act 11. Therefore, the CPU 151 controls the display device interface 157 so as to display the list of similar sales promotions on the display device 17. Through this control, data of the list of similar sales promotions is transmitted from the display device interface 157 to the display device 17, and a similar sales promotion list screen SC3 (see FIG. 7) is displayed on the display device 17.

FIG. 7 is a display example of the similar sales promotion list screen SC3. As illustrated in the drawing, a list of the sales promotion name and the period of the data record selected from the sales promotion database 131 as the similar sales promotion is displayed on the similar sales promotion list screen SC3. In addition, detail buttons B71, B72, B73, and B74 are displayed for each of the similar sales promotions. Furthermore, an OK button B8 is also displayed.

For example, when the person in charge who has checked the similar sales promotion list screen SC3 wants to know details of a sales promotion having "sales promotion A" in the sales promotion name, he/she inputs and operates the detail button B71 corresponding to the sales promotion name of "sales promotion A". In doing so, detailed information such as the target, the condition, and the benefit of the sales promotion for which the sales promotion name of "sales promotion A" is set is displayed on the display device 17. Similarly, when the person in charge wants to know details of a sales promotion having "sales promotion B" in the sales promotion name, he/she inputs and operates the detail button B72 corresponding to the sales promotion name of "sales promotion B". In doing so, the detailed information such as the target, the condition, and the benefit of the sales promotion for which the sales promotion name of "sales promotion B" is set is displayed on the display device 17.

Here, the CPU 151 performs a process of Act 10 to thereby function as the search unit.

The person in charge who has finished the checking of the similar sales promotion list screen SC3 inputs and operates the OK button B8.

The CPU 151 that has displayed the similar sales promotion list screen SC3 waits for inputting the OK button B8 as Act 15. When detecting based on a signal from the input device 16 that the OK button B8 is input (YES in Act 15), the CPU 151 returns to the process of Act 5. As a result, a screen of the display device 17 returns from the similar sales promotion list screen SC3 to the sales promotion providing screen SC2.

In the waiting state of Act 6 to Act 9, when detecting based on the signal from the input device 16 that the prediction check button B4 is input (YES in Act 8), the CPU 151 performs the similar sales promotion search process as Act 12. If finding the data record R having the total of similarities equal to or greater than the predetermined value is detected, the CPU 151 performs a prediction process as Act 13. That is, the CPU 151 calculates data indicating a prediction effect which would be obtained by performing the sales promotion, based on the achievement information of the detected data record R. For example, the CPU 151 calculates a predicted value of the sales amount and a predicted valued of profit. In addition, in a case where the benefit is a coupon, the CPU 151 calculates a prediction value of the number of issued coupon and a prediction value of the number of used coupons.

In the similar sales promotion search process performed in Act 10 and the similar sales promotion search process in Act 12, the predetermined values which are compared with the totals of similarities may be identical with each other or may be different from each other.

When the prediction process is finished, the CPU 151 controls the display device interface 157 so as to display a prediction result screen SC4 (see FIG. 8) on the display device 17 as Act 14. Through this control, data of the prediction result screen SC4 is transmitted from the display device interface 157 to the display device 17, and the prediction result screen SC4 is displayed on the display device 17.

FIG. 8 is a display example of the prediction result screen SC4. As illustrated in the drawing, data indicating the prediction effect calculated in the process of Act 13 is displayed on the prediction result screen SC4. In addition, an OK button B9 is displayed.

Here, the CPU 151 performs the processes of Act 12 and Act 13 to thereby function as a prediction unit.

The person in charge who has checked the prediction result screen SC4 inputs and operates the OK button B9.

The CPU 151 that has displayed the prediction result screen SC4 waits for inputting the OK button B9 as Act 15. When it is detected that the OK button B9 is input by the signal from the input device 16 (YES in Act 15), the process of the CPU 151 returns to Act 5. As a result, a screen of the display device 17 returns from the prediction result screen SC4 to the sales promotion providing screen SC2.

In the waiting state of Act 6 to Act 9, when detecting based on the signal from the input device 16 that the save button B5 is input (YES in Act 9), the CPU 151 performs a storage process as Act 16. That is, the CPU 151 obtains information of the sales promotion name displayed on the display field C1 of the sales promotion providing screen SC2, information of the sales promotion period displayed on the display field C2, and information of the sales promotion details (target, condition, benefit, or the like) displayed on the display field C3. Therefore, in a case where the person in charge corrects the information of the sales promotion details, the CPU 151 obtains information after the correction.

When obtaining the information of the sales promotion name, the sales promotion period, and the sales promotion details, the CPU 151 generates a new sales promotion ID. The CPU 151 creates the data record R including the sales promotion ID, the sales promotion name, the sales promotion period, and the sales promotion details, transmits the data record R to the sales promotion server 13, and instructs the sales promotion server 13 to store the data record R. In accordance with the instruction, the sales promotion server 13 additionally stores the data record R in the sales promotion database 131.

Here, the CPU 151 performs a process of Act 16 in cooperation with the sales promotion server 13 to thereby function as the storage unit.

When instructing the storing, the CPU 151 finishes the information process based on the sales promotion processing program.

In the waiting state of Act 6 to Act 9, in a case where detecting based on the signal from the input device 16 that the cancel button B6 is input (YES in Act 6), the CPU 151 finishes the information process based on the sales promotion processing program without performing the processes after Act 10. Thus, the sales promotion processing program is stopped.

As described above, according to the sales promotion information providing system 10 of the present embodiment, it is possible to automatically plan the sales promotion by machine learning. Therefore, the person in charge can collectively obtain data related to a corresponding sales promotion performed in the past only by inputting a couple of items related to the sales promotion to be performed and effectively plan an equivalent sales promotion. As a result, since a workload required to plan the sales promotion by the person in charge is greatly reduced as compared to the related art, it is possible to shorten a working time and reduce a human cost.

Particularly, a deep learning technology is used as the algorithm of the machine learning. Therefore, it is possible to obtain parameters used for evaluation of the sales promotion from the feature data of the abstract learning data, and to effectively plan the sales promotion based on the parameters.

In addition, the sales promotion information providing system 10 provides such an effect that it is possible to easily check details of a sales promotion similar to the sales promotion which is currently planned among the sales promotions performed in the past. Furthermore, there is an advantage that it is also possible to easily check a prediction effect that would be obtained by performing the sales promotion currently planned.

The present disclosure is not limited to the embodiment.

For example, in the embodiment, the merchandise data, the sales data, the membership data, the weather data, and the calendar data, as the parameter data are exemplified. However, the parameter data is not limited thereto. Data that influences the performance result of the sales promotion can be the parameter data.

In addition, in the embodiment, the deep learning technology performed in the learning processing device 14 is used as the learning algorithm. However, learning for obtaining parameters used for the evaluation of the sales promotion may be performed by using machine learning technology other than the deep learning technology. For example, the parameters used for the evaluation of the sales promotion may be obtained from learning data by using known machine learning technologies such as multiple regression analysis, support vector machine, and neural network.

In addition, in the embodiment, it is described that the parameter server 12, the sales promotion server 13, the learning processing device 14, and the sales promotion processing device 15 are connected through a network. Each of the parameter server 12, the sales promotion server 13, the learning processing device 14, and the sales promotion processing device 15 is a computer device, and the functions of two or more of these devices may be realized by one computer device.

In addition, in the embodiment, it is described that the sales promotion processing program is stored in the ROM 152 of the sales promotion processing device 15 or the auxiliary storage device 154. However, the embodiment is not limited thereto. A sales promotion processing program individually transferred from a computer device may be written in a writable storage device provided in the computer device according to an operation by a user or the like. Writing of the sales promotion processing program can be performed by recording on a removable recording medium or by communication through a network. The recording medium may be in any form as long as the recording medium can store a program (such as a CD-ROM and a memory card) and is readable by a device. In addition, installing or downloading a program may be performed in cooperation with an OS (operating system) or the like inside a device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A sales promotion processing device comprising:
an input device;
a display device;
a communication interface; and
a processor configured to:
receive, via the input device, input of one or more criteria for a planned sales promotion,
generate a new sales promotion based on the received one or more criteria,
retrieve, from a sales promotion database that stores data related to past sales promotions via the communication interface, one or more past sales promotions having at least a predetermined number of criteria that are similar to the received one or more criteria,
predict a result of the generated new sales promotion by evaluating the generated new sales promotion relative to feature data extracted from the criteria of the retrieved one or more past sales promotions by machine learning, and
control the display device to display the predicted result.

2. The sales promotion processing device according to claim 1, further comprising:
a storage device, wherein the processor controls the storage device to store the new sales promotion in response to a detected input in the input device corresponding to a save instruction.

3. The sales promotion processing device according to claim 1 or 2, wherein the processor is further configured to:
control the display device to display a new sales promotion screen that includes:
details of the new sales promotion,
a past check operation button, and
a prediction check operation button.

4. The sales promotion processing device according to claim 3, wherein, in response to a detected input in the input device corresponding to the past check operation button, the processor retrieves the one or more past sales promotions having at least a first predetermined number of criteria that are similar to the received one or more criteria, and controls the display device to display the retrieved one or more past sales promotions.

5. The sales promotion processing device according to claim 4, wherein, in response to a detected input in the input device corresponding to the prediction check operation button, the processor retrieves the one or more past sales promotions having at least a second predetermined number of criteria that are similar to the received one or more criteria, predicts the result of the generated new sales promotion, and controls the display device to display the predicted result.

6. The sales promotion processing device according to any one of claims 1 to 5, wherein the feature data is extracted from the criteria of the retrieved one or more past sales promotions by a learning processing device using machine learning in a multi-layered neural network.

7. A non-transitory computer readable medium containing a program that causes a computer to perform a sales promotion processing method comprising the steps of:
receiving, via an input device, input of one or more criteria for a planned sales promotion;
generating a new sales promotion based on the received one or more criteria;
retrieve, from a sales promotion database that stores data related to past sales promotions via the communication interface, one or more past sales promotions having at least a predetermined number of criteria that are similar to the received one or more criteria;
predicting a result of the generated new sales promotion by evaluating the generated new sales promotion relative to feature data extracted from the criteria of the retrieved one or more past sales promotions by machine learning; and
controlling a display device to display the predicted result.

8. The non-transitory computer readable medium according to claim 7, the method further comprising:
controlling a storage device to store the new sales promotion in response to a detected input in the input device corresponding to a save instruction.

9. The non-transitory computer readable medium according to claim 7 or 8, the method further comprising:
controlling the display device to display a new sales promotion screen that includes:
details of the new sales promotion,
a past check operation button, and
a prediction check operation button.

10. The non-transitory computer readable medium according to any one of claims 7 to 9, wherein the feature data is extracted from the criteria of the retrieved one or more past sales promotions by a learning processing device using machine learning in a multi-layered neural network.

11. A sales promotion processing system comprising:
a first computing device configured to:
receive criteria of each of one or more past sales promotions,
receive parameters regarding performance of each of the one or more past sales promotions,
extract, by machine learning, feature data based on the criteria of the retrieved one or more past sales promotions and the received parameters, and
store the extracted feature data; and
a second computing device including at least an input device, a display device, a communication interface, and a processor configured to:
receive, via the input device, input of one or more criteria for a planned sales promotion,
generate a new sales promotion based on the received one or more criteria,
retrieve, from a sales promotion database that stores data related to past sales promotions via the communication interface, one or more past sales promotions having at least a predetermined number of criteria that are similar to the received one or more criteria,
receive, from the first computing device, the extracted feature data,
predict a result of the generated new sales promotion by evaluating the generated new sales promotion relative to the received feature data, and
control the display device to display the predicted result.

12. The sales promotion processing system according to claim 11, wherein the second computing device further comprises:
a storage device, wherein the processor controls the storage device to store the new sales promotion in response to a detected input in the input device corresponding to a save instruction.

13. The sales promotion processing system according to claim 11 or 12, wherein the processor of the second computing device is further configured to:
control the display device to display a new sales promotion screen that includes:
details of the new sales promotion,
a past check operation button, and
a prediction check operation button.

14. The sales promotion processing system according to claim 13, wherein, in response to a detected input in the input device corresponding to the past check operation button, the processor of the second computing device retrieves the one or more past sales promotions having at least a first predetermined number of criteria that are similar to the received one or more criteria, and controls the display device to display the retrieved one or more past sales promotions.

15. The sales promotion processing system according to any one of claims 11 to 14, wherein the first computing device extracts the feature data from the criteria of the retrieved one or more past sales promotions using machine learning in a multi-layered neural network.
